# EUROPEAN PATENT APPLICATION

(11) **EP 4 729 164 A1**
(43) Date of publication of application: **22.04.2026**
(21) Application number: 24207142.1
(22) Date of filing: 17.10.2024
(51) Int. Cl.: B01J 13/22, C01B 33/18, C08K 3/36, C09D 7/40, C09C 1/30

(54) **CORE-SHELL PARTICLES AS OPACIFIERS**

(71) Applicant: Covestro (Netherlands) B.V., 6167 RD Geleen (NL)
(72) Inventor: Reardon, Damien, 5658AT Eindhoven (NL); Draaisma, Guy, 6132 TJ Sittard (NL); van Dijck, Michael, 3960 Bree (BE)
(74) Representative: Levpat

(57) **Abstract**

The present invention relates to a dispersion comprising
A) an opacifier comprising core-shell particles having a shell and a core,
B) a solvent,
and
C) a binder,
wherein
a) the shell comprises at least 90 wt.-% silica, based on the total weight of the shell, and constitutes for 50 to <100 wt.-% of the weight of the core-shell particles,
b) the core comprises lysine and latex and constitutes for >0 to 50 wt.-% of the weight of the core-shell particles,
c) the number-average size of the core-shell particles is from 200 to 500 nm.

## Description

The invention relates to a dispersion comprising core-shell particles as opacifier and a solvent, a method for preparing the dispersion, a coating comprising the dispersion as well as a method for preparing the coating.

The commercially most used white pigment is titanium dioxide which is present for example in coatings, paper or textile industry. Due to toxicological reasons, titanium dioxide is no longer allowed in the European Union as food additive. It is therefore necessary, to find alternatives to at least reduce titanium dioxide as white pigment.

One option for reduction of titanium dioxide in coatings are hollow core-shell nanoparticles with a silica shell. WO 2015/138144 A1 discloses the preparation of hollow core-shell nanoparticles which are used as opacifying agent in paint formulations with titanium dioxide. The nanoparticles of WO 2015/138144 A1 are functionalized in an additional step to improve the dispersibility of the nanoparticles.

It is therefore the object of the present invention to provide a dispersion comprising core-shell particles with good dispersibility in water without an additional functionalization of the core-shell particles, preferably the dispersion provides an improved opacity.

Accordingly, the present invention provides a dispersion comprising
A) an opacifier comprising core-shell particles having a shell and a core,
B) a solvent,
   and
C) a binder,
wherein
a) the shell comprises at least 90 wt.-% silica, based on the total weight of the shell, and constitutes for 50 to <100 wt.-% of the weight of the core-shell particles,
b) the core comprises lysine and latex and constitutes for >0 to 50 wt.-% of the weight of the core-shell particles,
c) the number-average size of the core-shell particles is from 200 to 500 nm.

The dispersion according to the invention comprises an opacifier A) which comprises core-shell particles of a size in the range of from 200 to 500 nm. Preferably the particles have an average specific size g where g = ½ x (length + width) of about 250 to 400 nm. More preferably the particles have an average size of about 260 to 380 nm. The core-shell particles may comprise a mixture of different types, sizes, and shapes of particles. However, preferably the core-shell particles are relatively monodisperse, that is of a reasonably uniform size and shape. The polydispersity index (PDI) is preferably 0.50 or less, more preferably 0.40 or less, even more preferably 0.2 or less.

The core-shell particles are obtained by providing a core material onto which a shell of silica is deposited. The core is then partially or completely removed from the core-shell particles. This may be achieved in any suitable manner at any suitable point in the production process. Preferred methods include, for example, thermal decomposition, photodegradation, solvent washing, electron-beam, laser, catalytic decomposition, and combinations thereof.

The core-shell particles for use herein comprise a core which is composed of an organic polymer and constitutes for >0 to 50 wt.-%, preferably 5 to 25 wt.-%, more preferably 5 to 20 wt.-% of the weight of the core-shell particles. The organic polymer used as core material may be homopolymers, random co-polymers, block-copolymers, diblock-copolymers, triblock-copolymers, and combinations thereof.

Preferably the core comprises a polymer selected from polyesters, polyamides, polycarbonates, polyurethanes, polystyrenes, poly(meth)acrylates, polymethacrylates, and combinations thereof.

Preferably the core comprises an poly(meth)acrylate. A poly(meth)acrylate is understood to be a (co)polymer of one or more vinyl monomers. Examples of suitable monomers include: styrenes, such as styrene itself, .alpha.-methlystyrene, o-, m- and p-methylstyrene, o-, m- and p-ethylstyrene, p-chlorostyrene and p-bromostyrene; normal and branched acrylic and methacrylic esters of alkanols (usually C1-C12) and cycloalkanols (usually C5-C12) such as methyl methacrylate, ethyl methacrylate, n-butyl methacrylate, t-butyl methacrylate, 2-ethylhexyl methacrylate, isobornyl methacrylate and cyclohexyl methacrylate and the corresponding acrylates; vinyl esters such as vinyl acetate and vinyl alkanoates; vinyl halides such as vinyl chloride; vinylidene halides such as vinylidene chloride; dienes such as 1,3-butadiene and isoprene.

A functional monomer(s) e.g. for imparting crosslinkability may optionally be included, examples of which include hydroxy and epoxy functional (meth)acrylates such as hydroxyalkyl (usually C1-C12) methacrylate e.g. 2-hydroxyethyl methacrylate, glycidyl methacrylate, and the corresponding acrylates, as well as keto- and aldehyde-functional monomers such as acrolein, methacrolein and methyl vinyl ketone, acetoacetoxy esters of hydroxyalkyl (usually C1-C12) acrylates and methacrylates such as acetoacetoxyethyl acrylate and methacrylate, and also keto or aldehyde-containing amides such as diacetone acrylamide. Examples of tertiairy amine functional monomers include: vinyl monomers bearing non-ionic amine functional groups (component i), (a)), which are used to form the oligomer include but are not limited to N,N-dimethylaminoethyl (meth)acrylate, N,N-dimethylaminohexyl (meth)acrylate, N,N-diethylaminoethyl (meth)acrylate, N-methyl-N-butylaminoethyl (meth)acrylate, tert-butylaminoethyl (meth)acrylate, N,N-dimethylaminopropyl (meth)acrylate, 2-(1,1,3,3,-tetramethylbutylamino) ethyl (meth)acrylate, beta-morpholinoethyl (meth)acrylate, 4-(beta-acryloxyethyl) pyridine, vinylbenzylamines, vinylphenylamines, 2-vinylpyridines or 4-vinylpyridines, p-aminostyrenes, dialkyaminostyrenes such as N,N,-diaminomethylstyrene, substituted diallylamines, N-vinylpiperidines, N-vinylimidazole, N-vinylimidazoline, N-vinylpyrazole, N-vinylindole, (meth)acryl amide like 2-(dimethylamino)ethyl (meth)acrylamide, 2-(tert-butylamino)ethyl (meth)acrylamide, 3-(dimethylamino)propyl (meth)acrylamide, N-substituted (meth)acryl amides, N-aminoalkyl (meth)acrylamides, vinyl ethers like 10-aminodecyl vinyl ether, 9-aminooctyl vinyl ether, 6-(diethylamino)hexyl vinyl ether, 5-aminopentyl vinyl ether, 3-aminopropyl vinyl ether, 2-aminoethyl vinyl ether, 2-aminobutyl vinyl ether, 4-aminobutyl vinyl ether, 2-dimethylaminoethyl vinyl ether, N-(3,5,5,-triethylhexyl)aminoethyl vinyl ether, N-cyclohexylaminoethyl vinyl ether, N-tert-butylaminoethyl vinyl ether, N-methylaminoethyl vinyl ether, N-2-ethylhexylaminoethyl vinyl ether, N-tert-octylaminoethyl vinyl ether, beta-pyrrolidinoethyl vinyl ether, or (N-beta-hydroxyethyl-N-methyl) aminoethyl vinyl ether may also be used. Cyclic ureido or thiourea containing unsaturated monomers like (meth)acryloxyethyl ethyleneurea, (meth)acryloxyethyl ethylenethiourea (meth)acrylamide ethyleneurea, (meth)acrylamide ethylenethiourea and alike can also be used. Mixtures of amine functional vinyl monomers can also be used. If desired these non-ionic monomers may be made cationic by, for example, neutralization as described below.

In a preferred embodiment the core material comprises cationic polymer. More preferably cationic block copolymer.

Preferably, said copolymer comprises a first polymer and a second polymer which both comprise amino-based (alkyl)acrylate monomer units, more preferably tertiary amino-based (alkyl)acrylate units, most preferably tertiary aminoalkyl (alkyl)acrylate units. Particularly preferably, said (alkyl)acrylate units comprise acrylate or, more particularly, methacrylate units.

In preferred embodiments, said tertiary aminoalkyl methacrylate units comprise dialkylaminoalkyl methacrylate units, especially dialkylaminoethyl methacrylate units. In a particularly preferred embodiment, said copolymer comprises poly[2-(diisopropylamino)ethyl methacrylate)-*block-*2-(dimethylamino)ethyl methacrylate] (PDPA-PDMA).

The degree of polymerization of the polymer is preferably controlled within specified limits. In a preferred embodiment of the invention, the degree of polymerization of the PDPA-PDMA copolymer is preferably controlled such that the mean degree of polymerization of the PDPA falls in the range of 20-25 and the mean degree of polymerization of the PDMA falls in the range of 65-70.

The polymeric core material may be prepared by any suitable polymerization technique, but for preferred embodiments particularly favourable results were achieved when employing methods such as group transfer polymerization and controlled radical polymerization techniques like RAFT and ATRP.

In a preferred embodiment the polymeric core is a latex, more preferably ionically stabilized polymer latex. As used herein, the term 'latex' refers to stabilized suspension of polymeric particles. Preferably the suspension is a cationic suspension. Preferably the average size of the polymeric particles is in the range 100-400 nm, more preferably 150-350 nm, even more preferably 250-350 nm. Preferably the pH range of the suspension is from 3 to 7, more preferably from 3.5 to 6.

Preferably the latex comprises polymer and cationic surfactant. Any suitable polymer may be used such as, for example, homopolymers, random co-polymers, block-copolymers, diblock-copolymers, triblock-copolymers, and combinations thereof.

Preferably, the polymer comprises styrene monomers, (meth)acrylic monomers, and copolymers and combinations thereof.

Preferably, the surfactant comprises ammonium, phosphate or sulfonate surfactant.

The core preferably comprises an aqueous cationic vinyl polymer composition. The cationic group may be incorporated into the polymer or may be added in any other form such as, for example, by the addition of a cationic surfactant. Preferably the cationic groups are at least partially bound to the polymer. Preferably the cationic groups are incorporated into the polymer during polymerization.

The polymer may be made in any suitable way. For example, in solution, dispersed and optionally solvent evaporated; with surfactant; with a polymeric (or oligomeric) stabilizer optionally with low levels of surfactant being present; by bulk or suspension polymerization, followed by dissipation of this polymer in water optionally followed by a further polymerization step. In a particular embodiment, a polymer dispersion (or solution) A is used as stabilizer for further vinyl polymerizations. Polymer A can for instance be a polyurethane, a polyester, polyamide, polycarbonate etc.

The shell of the core-shell particles is composed of silica. Preferably, the silica is deposited on said core material from at least one silica precursor. Optionally, said at least one silica precursor may comprise an inorganic silicate, for example an alkali metal silicate, such as sodium silicate. However, preferred silica precursors comprise organosilicate compounds, especially alkyl silicates such as tetramethyl orthosilicate or tetraethyl orthosilicate. Most preferably, said silica precursor comprises tetramethyl orthosilicate..

Deposition of silica may be carried out by simply treating the polymers with suitable silica precursors under mild conditions. Thus, both in the case of the preferred copolymer and latex micelles, these materials may be stirred with a silica precursor, typically an organosilicate compound, especially an alkyl silicate such as tetraethyl orthosilicate or, most preferably, tetramethyl orthosilicate, for between 10 and 48 hours at 5-60°C and a pH of between 2.0 and 9.0. In a typical reaction, PDPA-PDMA copolymer may be treated with tetramethyl orthosilicate for 20 minutes at 20°C and pH 7.2. The method of the second aspect of the present invention does, in this regard, offer significant advantages over the methods of the prior art, which require that silica deposition procedures should be carried out at low pH values, and typically at pH 1.

Furthermore, favourable results have been achieved with compositions comprising acrylic copolymer latex particles These particles have been used as templates for silica deposition. The biomimetic deposition of silica can be performed using TMOS as precursor in a aqueous environment.

Preferably the shell has a thickness of 1 to 75 nm, more preferably 5 to 50 nm, even more preferably 10 nm to 25 nm. The size of the core, the shell and the core-shell particles itself can be measured by electron microscopy.

The opacifier A) can further comprise additional opacifiers, like titanium dioxide, kaolin, BaSO₄, ZnO, ZnS, CaCO₃, Al₂O₃, SnO₂, lithopone or Sipernat^{®} (SiOz based). Preferably, the opacifier comprises at least 50 wt.-%, more preferably at least 90 wt.-%, based on the weight of the opacifier A), of the core-shell particles. Most preferably, the opacifier A) consists of the core-shell particles.

In a preferred embodiment, the dispersion comprises 1 to 80 wt.-%, more preferably 1.5 to 55 wt.-%, most preferably 2 to 35 wt.-%, based on the weight of the dispersion, of the opacifier A).

The dispersion according to the invention further comprises a solvent B), like water, glycols, alcohols, esters, ketones, for example ethyl acetate, acetone, methylethylketone, white spirit, isopropanol or butanol, preferably water. The amount of solvent in the dispersion is preferably in the range of from 10 to 90 wt.-%, more preferably 20 to 40 wt.-%, based on the weight of the dispersion.

Further, the dispersion comprises a binder C), preferably in an amount of 25 to 60 wt.-%, more preferably 35 to 60 wt.-% and most preferably 45 to 55 wt.-%, based on the weight of the dispersion. The binder is preferably an organic polymer, like an acrylic, polyester, alkyd resin, polyurethane, vinylester or epoxy.

Optionally, the dispersion further comprises a thickener D) to increase the viscosity of the dispersion. Suitable thickeners are for example polymers based on cellulose. The amount of thickener is preferably in the range of from 0.05 to 1.00 wt.-%, more preferably 0.08 to 0.80 wt.-%, most preferably 0.12 to 0.50 wt.-%, based on the weight of the dispersion.

In a preferred embodiment, the dispersion comprises silica in an amount of more than 20 wt.-%, more preferably > 20 to 50 wt.-%, based on the weight of the dispersion. It is most preferred, that the silica in the dispersion comes only from the core-shell particles.

The dispersion according to the invention can be prepared by simple mixing of the components. It is further possible to put the dispersion in an ultrasonic bath in case that the core-shell particles are not dispersible by simple mixing.

The dispersion of the invention can be used for paints, coatings, plastics and rubber additives, cosmetics, paper production, glass or food additives.

### Experiments

Latex 1: DMAEMA-co-MMA polymer particles with an average particle size of 260 nm (measured with TEM images), obtained by emulsion polymerization of 15 wt.-% (dimethylamino)ethyl methacrylate (DMAEMA) and 85 wt.-% methacrylic acid methyl ester (MMA).

Lysine stock solution: A 10% Lysine stock solution was prepared by dissolving 10g of L-lysine in 90g demi-water.

Ammonia stock solution: A 5% ammonia stock solution was prepared by diluting 10g concentrated ammonia (25wt%) in 40g demi-water.

Formic acid / ammonia stock solution: 15.1 grams formic acid were added to 135 grams demi-water. Portion-wise 26.8 grams of 25% ammonia were added until a pH of 8.4 was achieved.

Latex stock solution: 450 grams of Latex 1 was added at room temperature to a mixture of 446.4 grams demi-water and 3.755 grams 100% formic acid. The solid content of this stock-solution was determined to be 13.61% via IR-drying till constant weight on a Ohaus IR-dryer.

Paint Binder: A mixture of 30mg Natrosol PLUS 330 PA (thickener) in 30g Neocryl HP 3000XP (latex binder) and stirred for at least 2 hours prior to use.

### Examples 1 to 22

225 grams of the latex stock-solution was further diluted with demi-water to the respective amount of solids as given in table 1 for each example. The respective amount of lysine stock-solution was added according to table 1. The pH value of the dispersion was adjusted to the respective value according to table 1 by adding ammonia stock solution and/or formic acid / ammonia stock solution.

The latex dispersion was transferred to a 1-liter double walled reactor and heated to 60°C.

The amount of tetraethyl orthosilicate (TEOS) dosed to the dispersion was adjusted to achieve a theoretical porosity of the core-shell particles of 50. Dosing was carried out under stirring at 250rpm. After TEOS was added, the stirring speed was increased to 350rpm and left stirring for 24h at 60°C. The reaction mixture was cooled to room temperature and the silicated particles were as such obtained as a colloidal dispersion. The properties of the core-shell particles are given in table 1.

As shown in tables 1, for avoiding coagulation of the core-shell particles comprising lysine it is crucial to adjust the pH value for the shell growth according to the amount of latex.

**Table 1: Preparation of core-shell particles**

| Example | Process | latex solids (wt.-%) | lysine to SiO₂ (wt.-%) | pH | Conductivity (mS/cm) | Final Product (nm) |
|---|---|---|---|---|---|---|
| 1 | (a) | 2,5 | 4 | 9,05 | 2,18 | 327,7 |
| 2 | (a) | 3 | 4 | 8,80 | 2,48 | 320,8 |
| 3 | (a) | 3,5 | 4 | 8,85 | 2,85 | 322,7 |
| 4 | * | 4 | 4 | 8,75 | 3,14 | coagulated |
| 5 | * | 5 | 4 | 8,80 | 3,83 | coagulated |
| 6 | * | 4 | 4 | 8,65 | 3,13 | coagulated |
| 7 | (b) | 4 | 4 | 8,90 | 3,19 | 324,2 |
| 8 | * | 4,5 | 4 | 8,90 | 3,52 | coagulated |
| 9 | (b) | 4 | 4 | 9,05 | 3,33 | 320,7 |
| 10 | * | 5 | 1 | 8,50 | 4,18 | coagulated |
| 11 | * | 5 | 2 | 8,60 | 4,05 | coagulated |
| 12 | * | 5 | 6 | 8,65 | 3,55 | coagulated |
| 13 | * | 5 | 4 | 8,70 | 3,8 | coagulated |
| 14 | * | 5 | 4 | 8,90 | 3,91 | coagulated |
| 15 | * | 5,5 | 4 | 8,90 | 4,31 | coagulated |
| 16 | * | 5 | 4 | 9,00 | 3,89 | coagulated |
| 17 | (c) | 5 | 4 | 9,20 | 4,06 | 315,7 |
| 18 | (c) | 5 | 4 | 9,40 | 4,22 | 305 |
| 19 | (c) | 6 | 4 | 9,20 | 4,73 | 603 |
| 20 | (c) | 6 | 4 | 9,40 | 4,91 | 427 |
| 21 | (c) | 6 | 4 | 9,60 | 5,02 | 491 |
| 22 | (c) | 6 | 4 | 9,80 | 5,12 | 825 |

| | | | | | | |
|---|---|---|---|---|---|---|
| * comparative examples | | | | | | |

Coagulated: Average particle size measured was at least 1 µm .

Table 1 shows that core-shell nanoparticles comprising latex and lysine are obtained as dispersion when the process is carried out according to (a), (b) or (c) of the invention. If the amount of latex solids in the preparation of the core-shell nanoparticles is less than 4 wt.-% (examples 1 to 3), a dispersion is achieved when the pH is adjusted to 8 or more (process according to (a)). In the case that the amount of latex solids is 4 wt.-%, the pH has to be at least 8.80 (process according to (b)) to obtain a dispersion of core-shell nanoparticles (examples 7 and 9). Even slightly higher amounts of latex solids at the same pH value result in coagulation of the core-shell nanoparticles as shown by examples 8 and 14. Lowering the pH at an amount of 4 wt.-% latex solids of under 8.80 also results in coagulation of the core-shell nanoparticles (examples 4 and 6). In cases where the amount of latex solids is above 4 wt.-%, the pH has to be adjusted to at least 9.20 to achieve a dispersion of the core-shell nanoparticles (examples 17 to 22). If the pH value is below 9.20, the core-shell nanoparticles coagulate (examples 8 and 10 to 16).

### Example 23

225 grams of the latex stock-solution was further diluted with 1306 grams demi-water. 4.05 grams of lysine stock-solution were added and the pH value of the dispersion was adjusted to 8.5 by adding 2.05 grams of ammonia stock solution and 1.65 grams of formic acid / ammonia stock solution.

The latex dispersion was transferred to a 1-liter double walled reactor and heated to 60°C.

34.8 grams of TEOS were dosed under stirring at 250rpm to the dispersion. After TEOS was added, the stirring speed was increased to 350rpm and left stirring for 24h at 60°C. The reaction mixture was cooled to room temperature and the silicated particles were as such obtained as a colloidal dispersion.

495.42g of deionized-water and 5.37g of concentrated ammonia (25wt%) were mixed, 20.0g of this diluted ammonia mixture was added to 80.0g technical grade ethanol, the obtained alkaline ethanol water mixture was used as extraction solvent.

In a glass vial, 5.01g of core-shell particles of example 23 were weighed in. The respective amount of the alkaline water ethanol mixture (see table 2) was dropwise added while stirring. Afterwards, the mixture was transferred to 1.5mL Eppendorf centrifuge tubes and centrifuged for 4 minutes at 10.000 rcf with an Eppendorf 5415 D Centrifuge.

After centrifugation, the supernatant was discarded, and the pellet was redispersed in 100 µL diluted aqueous ammonia and put in an ultrasonic bath for 60 minutes. The amount of the remaining core was measured via TGA to be 15 wt.-%, based on the total weight of the core-shell particles.

102.2mg of paint binder was mixed with 73.5mg redispersed extracted core-shell particles (402.4mg non-extracted core-shell particles) from example 23, 125mg aqueous ammonia was added. The mixture was homogenized by vortex mixing for at least 30 seconds. 30µl of the material was applied on a 1cm² square created with scotch tape at the intersection of the black and white area on a Leneta chart. The sample was dried under ambient conditions for 24 hours (21.0°C and 23% RH).

The properties of the different core-shell particles according to example 23 are shown in table 2.

**Table 2: Opacity paint compositions comprising partially extracted core-shell particles**

| Example | Latex solids wt.-% | Lysine to SiO₂ wt.-% | pH | Theorethical porosity | Alkaline ethanol mixture (g) | Final product nm | Opacity % |
|---|---|---|---|---|---|---|---|
| 23A | 2 | 4 | 8,5 | 50 | 2,43 | 363 nm | 52 |
| 23B | 2 | 4 | 8,5 | 50 | 5,13 | 359 nm | 48 |
| 23C | 2 | 4 | 8,5 | 50 | 7,52 | 584 nm | 57 |
| 23D | 2 | 4 | 8,5 | 50 | 9,96 | 340 nm | 67 |
| 23E | 2 | 4 | 8,5 | 50 | 12,55 | 326 nm | 66 |
| 23 | 2 | 4 | 8,5 | 50 | 0,00 | 306 nm | 26 |

Table 2 shows a preferred embodiment of the invention, wherein in an additional step the core of the core-shell particles is partially removed and the core-shell particles are used in paint formulations. Example 23 comprises core-shell particles according to the invention without an additional step where the core is partially removed. If the core of the core-shell particles is partially removed (examples 23A to 23E), the opacity of the paint formulation is increased.

## Claims

1. A dispersion comprising
A) an opacifier comprising core-shell particles having a shell and a core,
B) a solvent,
and
C) a binder,
wherein
a) the shell comprises at least 90 wt.-% silica, based on the total weight of the shell, and constitutes for 50 to <100 wt.-% of the weight of the core-shell particles,
b) the core comprises lysine and latex and constitutes for >0 to 50 wt.-% of the weight of the core-shell particles,
c) the number-average size of the core-shell particles is from 200 to 500 nm.

2. A dispersion according to claim 1, wherein the core of the core-shell particles constitutes for 5 to 25 wt.-%, based on the weight of the core-shell particles.

3. A dispersion according to claim 1 or 2, wherein the dispersion comprises 10 - 45 wt.-% of the core-shell particle and 55 to 90 wt.-% of a solvent, based on the weight of the dispersion.

4. A dispersion according to any of claims 1 to 3, wherein the dispersion comprises more than 20 wt.-% silica, based on the weight of the dispersion.

5. A dispersion according to any of claims 1 to 3, wherein the dispersion comprises >20 to 50 wt.-% silica, based on the weight of the dispersion.

6. A dispersion according to any of claims 1 to 5, wherein the opacifier A) further comprises titanium dioxide.

7. A dispersion according to claim 6, wherein the opacifier A) comprises titanium dioxide in an amount of 5 to 20 wt.-%, based on the weight of the dispersion.

8. A dispersion according to any of claims 1 to 4, wherein the dispersion comprises a thickener D), preferably in an amount of 0.05 to 1.00 wt.-%, more preferably 0.08 to 0.80 wt.-%, most preferably 0.12 to 0.5 wt.-%, based on the weight of the dispersion.

9. A dispersion according to claim 1, wherein the dispersion consists of
A) 10 to 45 wt.-% of opacifier consisting of hollow core-shell particles,
B) 20 to 40 wt.-% of a solvent,
C) 25 to 60 wt.-% of a binder,
and
D) optionally 0.05 to 1.00 wt.-% of a thickener,
wherein the dispersion comprises 0.5 to 5 wt.-% silica and all wt.-% are based on the weight of the dispersion.

10. A method for preparing a coating, comprising the steps of
(i) applying a dispersion of core-shell particles according to any of claims 1 to 9 onto a substrate, preferably in a thickness of 10 to 200 µm,
(ii) removing the solvent, preferably by drying.

11. A coating obtained by the process of claim 10.

12. A method for preparing a dispersion of core-shell particles according to any of claims 1 to 10.

13. A method for preparation of core-shell particles, comprising the steps of
(i) preparing a dispersion comprising latex in a solvent comprising water,
(ii) adjusting the pH-value of the dispersion,
(iii) adding a silica precursor, and
(iv) heating the dispersion to a temperature in the range of from 40 to 80°C to obtain a dispersion comprising core-shell particles,
(v) partially extracting the latex from the core-shell particles with an alcohol/water-mixture,
wherein the dispersion in (i) further comprises lysine in the range of from 0.5 to 15 wt.-%, based on the theoretical amount of silica formed by the silica precursor, and wherein
(a) the latex is present in the dispersion with a solid level of less than 4.0 wt.-%, based on the total weight of the dispersion, and the pH in step (ii) is adjusted to a pH of 8.00 and more, or
(b) the latex is present in the dispersion with a solid level of 4.0 wt.-%, based on the total weight of the dispersion, and the pH in step (ii) is adjusted to a pH of 8.80 and more,
(c) the latex is present in the dispersion with a solid level of more than 4.0 wt.-%, based on the total weight of the dispersion, and the pH in step (ii) is adjusted to a pH of 9.10 and more,
and wherein the obtained core-shell nanoparticles have a number-average size of from 200 to 500 nm shell, with the shell comprising at least 90 wt.-% silica, based on the total weight of the shell, and constitutes for 50 to <100 wt.-% of the weight of the core-shell particles and the core constituting for >0 to 50 wt.-% of the weight of the core-shell particles.

14. Core-shell particles obtained by a process according to claim 13.

15. Use of a core-shell particles according to claim 14 as an opacifier additive.
